# EUROPEAN PATENT SPECIFICATION

(11) **EP 1 780 245 B1**
(45) Date of publication and mention of the grant of the patent: **02.11.2011**
(21) Application number: 05752501.6
(22) Date of filing: 09.06.2005
(51) Int. Cl.: C09C 3/06, C09C 1/00

(54) **PIGMENT HAVING ANGLE DEPENDENCE OF THE INTERFERENCE COLORS AND ITS PRODUCTION PROCESS**
PIGMENT MIT WINKELABHÄNGIGKEIT DER INTERFERENZFARBEN UND SEIN HERSTELLUNGSVERFAHREN
PIGMENT AYANT UNE DEPENDANCE ANGULAIRE DES COULEURS D"INTERFERENCE ET SON PROCEDE DE FABRICATION

(30) Priority: 10.08.2004 CN 200410051129
(43) Date of publication of application: 02.05.2007
(73) Proprietor: Shantou Longhua Pearl Lustre Co., Ltd., Guangdong (CN)
(72) Inventor: FU, Jiansheng, Shantou, Guangdong (CN); PENG, Yiting, Shantou, Guangdong (CN); TIAN, Xiaohui, Shantou, Guangdong (CN)
(74) Representative: Crowhurst, Charlotte Waveney
(86) International application number: PCT/CN2005/000828
(87) International publication number: WO 2006/015530

(56) References cited:
- EP-A1- 1 213 330
- CN-A- 1 225 657
- CN-A- 1 225 658
- CN-A- 1 229 110
- CN-A- 1 270 615
- CN-A- 1 357 578
- CN-A- 1 384 858
- DE-A1- 19 618 569
- DE-A1- 19 746 067
- US-A- 5 753 371
- ZHONG S. ET AL: 'New progress and preparation methods for pearlesent pigment' CHINA TUNGSTEN INDUSTRY vol. 16, no. 4, August 2001, pages 33 - 36, XP008116175

## Description

### Technical Field

The present invention relates to allochroic pigments, more especially, to pigments which exhibit different interference colors as observed at different view angles. The present invention also relates to methods for producing the allochroic pigments.

### Background Art

Multilayer allochroic pigments will exhibit a color varying among two or more strong interference colors as observed at different view angles. Presently, most of this kind of pigments having angle dependence of the interference colors has a multilayer structure formed by coating metal oxide and non-metal oxide on a surface of substrate using vapor method, plasma sputtering method or wet chemical method. Although the producing methods of pigments vary with the substrates, there are problems such as complex process, expensive cost, small variable color range and the like.

Multilayer pigments having opacity metal foils or metal oxides as substrates are produced by forming substrates on nets with a certain meshes or a soluble membrane, then coating metal oxide on one or both surface(s) of the metal foil using vacuum sputtering method, and peeling off finally, wherein said metal oxide coatings consist of alternate coatings with materials having low refractive index and high refractive index, and the color changes and color varying ranges of the multilayer pigments are varied by controlling the optical thickness of the coatings. This process requires an apparatus with high precision, chemicals with high purity, strict process control, and its yield is low. Therefore, its production cost is high, thereby restricting its mass application. Furthermore, the color and varying range thereof is not easy to be controlled.

Multilayer pigments having aluminium powders or synthetic ferric oxide flakes (said ferric oxide flakes are prepared by a high-temperature and high-pressure method) as substrates are produced by forming alternately coatings of metal oxide with low refractive index and with high refractive index on surfaces of the substrates using vapor deposit method, carrying the organic metal compound with an inert gas into a boiling bed, then absorbing the organic metal compound onto the substrate and decomposing into a metal oxide at a certain temperature, and depositing on the substrate to form a coating with desired thickness on the surface of the substrate. The problems of this process lie in that it is difficult to add the substrate in a controlled metric manner and the substrate can hardly be dispersed effectively in the boiling bed. Furthermore, the use of organic metal compounds will cause environmental problems. The pigment production process is complex, with high demand on the apparatus and the control precision chemicals, and the production cost of the substrate is high, and the like. Therefore, this product is high in cost, thereby restricting its widely application.

Allochroic pigments having synthetic silicon dioxides as substrates (the substrates are prepared by coating a certain concentration of water glass onto a special device, then drying and peeling off), is produced by hydrolyzing a soluble inorganic metal compound and a soluble non-metal compound to form a metal oxide and a non-metal oxide hydrates, by using wet chemical process, which are deposited onto the substrate, and a metal oxide coating with low refractive index and a metal oxide coating with high refractive index can be deposited alternately on the substrate. Because this process employs wet chemical process, it is easy for operating and controlling the optical thickness of desired coatings. Therefore, this process is simple and can be applied easily in a mass production. It can also form only one metal oxide coating with high refractive index on the surface of the silicon dioxide substrate to achieve the effect of the angle dependence of the interference colors. However, the thickness of this kind of substrate is required to be less than 1 µm, usually in a range of 200-500nm, which causes a great problems in the preparation of the substrate, thus the cost of the substrate is high, and its yield is low. The problems such as high cost and narrow application range are also existed in these kinds of pigments.

US patent No. 6,692,561 discloses pigments with strong interference colors in which mica is used as substrate. Said pigments are prepared by coating first layer of metal oxide coating with low refractive index and second layer of metal oxide coating with high refractive index on the mica substrate. Since the optimal value of the oxide coating thickness is not given, it is considered that the substantial problem has not been solved in this patent.

Furthermore, as it is can be analyzed from its test data, the test angel in the patent is fixed. It can be seen that the color variation range is narrow. These kinds of pigments belong to ordinary allochroic pigments, and the angle dependence of the interference colors is not achieved.

DE 19,618,569 A (corresponding to CN 1,225,657A) discloses multilayer interference pigments, which consist of a transparent carrier with alternating layers of low and high RI (difference at least 0.1) metal oxide obtained by wet process coating and hydrolysis of the appropriate water-soluble metal compounds on the carrier, this being followed by separating-off, drying and optionally calcining the product. The carrier material is suspended in water and alternatingly coated with metal oxide hydrate.

EP 1213330 A (corresponding to CN 1357578 A) relates to silver-colored luster pigments based on multiply coated platelet-shaped substrates, which has at least one layer sequence of TiO₂, a colorless coating and another TiO₂ layer. The pigment can optionally have an outer protective layer. These luster pigments are useful. The document describes the use thereof in paints, coatings, printing inks, including security printing inks, plastics, ceramic materials, glasses, cosmetic formulations and for producing pigment preparations and dry product forms such as granules, chips, pellets and briquettes.

DE 19,746,067 A (corresponding to CN 1,270,615A) relates to interference pigments based on flaky substrates which have at least one series of layers comprising (A) a coating with a refractive index n > 2.0, (B) a colorless coating with a refractive index n ≤ 1.8 and (C) a non-absorbing, highly refractive coating, and optionally (D) an outer protective coating.

The thickness of oxide coatings on substrates are difficult to be measured, so that it is usually calculated in term of coating ratio, i.e. the weight percent of oxide coating relative to the total weight of the pigment.

### Disclosure of the Invention

An object of the invention is to provide allochroic pigments which exhibit different strong interference colors as observed at different view angles and can be produced in a low cost and a simple process.

Another object of the invention is to provide methods for producing said allochroic pigments.

To achieve the above-mentioned objects, the pigment of the present invention has a synthetic flake of silicate as a substrate, and a metal oxide coating with refractive index of more than 1.8 and an oxide coating with refractive index of less than 1.8 are deposited alternately on a surface of the synthetic flake of silicate. The number of the coatings is at least three, and said oxide coating with refractive index of less than 1.8 always lies between two metal oxide coatings with refractive index of more than 1.8, and said synthetic flake of silicate is a synthetic flake of sodium calcium silicate having a thickness of 0.1-10 µm and a particle diameter of 5-1500 µm.

The above-mentioned synthetic flake of silicate is preferably a synthetic flake of sodium calcium silicate having a thickness of 1-5 µm and a particle diameter of 30-150 µm.

The above-mentioned metal oxide coating with refractive index of more than 1.8 has a coating ratio of 1-50%, preferably 3-30%.

The above-mentioned metal oxide coating with refractive index of less than 1.8 has a coating ratio of 5-80%, preferably 10-60%.

The above-mentioned metal oxide with refractive index of more than 1.8 is TiO₂, SnO₂, Fe₂O₃, Fe₃O₄, CoO, Co₂O₃, ZrO₂, Cr₂O₃ or a mixture or complex thereof.

The above-mentioned oxide with refractive index of less than 1.8 is SiO₂, Al₂O₃, Al(OH)₃, B₂O₃ or a mixture or complex thereof.

The present invention also provide a method for producing above-mentioned pigment, said method comprises following steps:
step (1), in which a synthetic flake of silicate having a thickness of 0.1-10 µm and a particle diameter of 5-1500 µm is added into deionized water and stirred to form a suspension liquid with solid content of 1-20%; this suspension liquid is heated to 60-90°C and adjusted to pH 2-9; and then a solution of a soluble inorganic metal salt is added to reach a coating ratio of metal oxide coating of 1-50%, while the pH value thereof is kept constant; and after finishing the addition of the solution, the mixture is stirred at a constant temperature for 10-30 minutes;
step (2), in which the suspension liquid obtained in step (1) is adjusted to pH 6-14, then a solution of a soluble inorganic salt is added to reach a coating ratio of oxide coating of 5-80%, while the pH value of the suspension liquid is kept constant; and after finishing the addition of the solution, the mixture is stirred at a constant temperature for 10-30 minutes;
step (3), in which the suspension liquid obtained in step (2) is adjusted to pH 2-9, then a solution of a soluble inorganic metal salt is added to reach a coating ratio of metal oxide coating of 1-50%, while the pH value thereof is kept constant, and after finishing the addition of the solution, the mixture is stirred at a constant temperature for 10-30 minutes;
step (4), in which the suspension liquid obtained in step (3) is filtered, washed with deionized water, dried, calcined and sieved;
wherein the metal oxide as a hydrolysate of said soluble inorganic metal salt has a refractive index of more than 1.8, and the oxide as a hydrolysate of said soluble inorganic salt has a refractive index of less than 1.8.

The above-mentioned steps (1), (2), and (3) can be repeated alternately.

The above-mentioned soluble inorganic metal salt is selected from a group consisting of TiCl₄, TiOCl₂, SnCl₄, SnCl₂, FeCl₃, FeCl₂, CoCl₂, ZrOCl₂, CrCl₃ or the like.

The above-mentioned soluble inorganic salt is selected from a group consisting of water glass, silicate, AlCl₃, NaAlO₂, borax or the like.

The drying temperature in the above-mentioned step (4) is 100-150°C, and the calcining temperature is 250-1000°C.

The multilayer allochroic pigments having angle dependence of the interference colors of the invention have the following advantages:

Because synthetic flakes of silicate are used as the substrates for the pigments of the invention, this substrate material can be easily obtained in a low price, so that the present pigments are much low in the cost as compared with those having opacity metal foil or metal oxide, synthetic silicon dioxide, and silicone liquid crystal plate as substrates, thereby broadening its application fields.

The pigments of the present invention are produced by a method wherein metal oxide coatings with high refractive index is firstly formed on the surfaces of the synthetic flakes of silicate such that the active groups on the surfaces of the flakes of silicate are distributed homogeneously to achieve a consistent optical properties, and then an oxide coating with low refractive index is coated directly to a desired thickness, and another metal oxide coating with high refractive index is coated thereafter, thereby an effect that different strong interference colors can be observed at different view angles is obtained.

The substrates used in the present pigments are synthetic flakes of silicate which have a single layer structure. When they are irradiated with light, the light refraction number of the present pigments will be much less than those of pigments having mica as substrates, while the reflection strength of the former will be much larger than that of the latter. Therefore, the vividness and brightness of the color of the present pigments is much better than that of pigments having mica as substrates in a macroscopical view.

In the method of the present invention, because a wet chemical hydrolysis step is employed, an oxide coating with high refractive index and an oxide coating with low refractive index can be coated alternately on a surface of the synthetic flake of silicate substrate for one time or several times, so this coating method is flexible. Using the method, many tones and different color variation ranges can be prepared. The colors in one color variation range can be changed for two, three or more times, until all the color range is covered. During the coating via hydrolysis, the coating ratio of the metal oxide coating can be controlled by amount of the inorganic salt solution added, thus its optical thickness can be controlled to achieve the change of color phase of the pigments.

The method of the present invention is easy in operation and quality control, and the quality of products is stable. Furthermore, because a wet chemical hydrolysis process for coating is used, this method can be applied in a mass production. Furthermore, the use of a hydrolysate of the soluble inorganic metal compound makes the handle easy and can hardly cause any environmental problems.

### Best Mode for Carrying out the Invention

### Example 1

The present example is illustrated by pigments having a structure of Fe₂O₃ / SiO₂ / Fe₂O₃ / flake of silicate / Fe₂O₃ / SiO₂ / Fe₂O₃.

100 g of flakes of sodium calcium silicate powders having a thickness of 1-5 µm and a particle diameter of 30-150 µm is suspended in 1000 ml of deionized water, and the suspension liquid was stirred and heated to 75°C.

The pH value of the suspension liquid was adjusted to 3.5 using 18% hydrochloric acid solution, and then 200 ml of 10% ferric chloride solution was added metrically. The pH of the suspension liquid was kept constant by adding dropwise 15% sodium hydroxide solution during this process. After finishing the addition, the mixture was stirred at a constant temperature for another 15 minutes.

The pH of the suspension liquid was adjusted to 9.5 using 32% sodium hydroxide solution, and then the suspension liquid was stirred for 15 minutes.

3 L of sodium silicate solution (13 g/L in term of SiO₂) was added dropwise metrically. The pH of the suspension liquid was kept constant by adding dropwise 15% hydrochloric acid solution during this process. After finishing the addition, the mixture was stirred at a constant temperature for another 30 minutes.

The pH value of the suspension liquid was adjusted to 3.5 using 18% hydrochloric acid solution, and the suspension liquid was stirred at a constant temperature for 30 minutes. Then, 70 ml of 120 g/L ferric chloride solution was added dropwise. The pH of the suspension liquid was kept constant by adding dropwise 15% sodium hydroxide solution during this process. After finishing the addition, the mixture was stirred at a constant temperature for another 15 minutes.

The suspension liquid was filtered. The residue was washed with deionized water, dried at 120°C, calcined at 500°C, then past through a 100 mesh sieve, thus a product was obtained.

The total oxide coating ratio of the resultant product was 35.9%, wherein the coating ratio of first layer of ferric oxide was 7.6%, the coating ratio of second layer of silicon dioxide was 25.7%, and the coating ratio of third layer of ferric oxide was 2.65%.

The resultant product was mixed with a transparent and colorless adhesion agent made of cellulose nitrate in an appropriate ratio, and then the mixture was drawdown onto a drawdown paper with black and white bases. As viewed from a vertical view angle to a horizontal view angle, the exhibited color value was a color value flowing from purple-red to yellow-green.

### Example 2

The present example is illustrated by pigments having a structure of Fe₂O₃ / SiO₂ / Fe₂O₃ / flake of silicate / Fe₂O₃ / SiO₂ / Fe₂O₃.

100 g of flakes of sodium calcium silicate powders having a thickness of 1-5 µm and a particle diameter of 10-60 µm is suspended in 1000 ml of deionized water, and the suspension liquid was stirred and heated to 75°C.

The pH value of the suspension liquid was adjusted to 3.5 using 18% hydrochloric acid solution, and then 300 ml of 10% ferric chloride solution was added metrically. The pH of the suspension liquid was kept constant by adding dropwise 15% sodium hydroxide solution during this process. After finishing the addition, the mixture was stirred at a constant temperature for another 15 minutes.

The pH of the suspension liquid was adjusted to 9.5 using 32% sodium hydroxide solution, and then the suspension liquid was stirred for 15 minutes.

4 L of sodium silicate solution (13 g/L in term of SiO₂) was added dropwise metrically. The pH of the suspension liquid was kept constant by adding dropwise 15% hydrochloric acid solution during this process. After finishing the addition, the mixture was stirred at a constant temperature for another 30 minutes.

The pH value of the suspension liquid was adjusted to 3.5 using 18% hydrochloric acid solution, and the suspension liquid was stirred at a constant temperature for 30 minutes. Then, 94 ml of 120 g/L ferric chloride solution was added dropwise. The pH of the suspension liquid was kept constant by adding dropwise 15% sodium hydroxide solution during this process. After finishing the addition, the mixture was stirred at a constant temperature for another 15 minutes.

The suspension liquid was filtered. The residue was washed with deionized water, dried at 120°C, calcined at 500°C, then past through a 100 mesh sieve, thus a product was obtained.

The total oxide coating ratio of the resultant product was 41.25%, wherein the coating ratio of first layer of ferric oxide was 8.68%, the coating ratio of second layer of silicon dioxide was 30.55%, and the coating ratio of third layer of ferric oxide was 2.04%.

The resultant product was mixed with a transparent and colorless adhesion agent made of cellulose nitrate in an appropriate ratio, and then the mixture was drawdown onto a drawdown paper with black and white bases. As viewed from a vertical view angle to a horizontal view angle, the exhibited color value was a color value flowing from purple-red to yellow-green.

The above-mentioned coating of metal oxide with high refractive index and metal oxide with low refractive index can be carried out alternately for several times to form different structures, such as Fe₂O₃/SiO₂/Fe₂O₃ / SiO₂ / Fe₂O₃ / SiO₂ / Fe₂O₃ / flake of silicate / Fe₂O₃ / SiO₂ / Fe₂O₃/ SiO₂ / Fe₂O₃ / SiO₂ / Fe₂O₃, or TiO₂ / Fe₂O₃ / SiO₂ / Fe₂O₃ / TiO₂ / flake of silicate / TiO₂ / Fe₂O₃ / SiO₂ / Fe₂O₃ / TiO₂. Thus, pigments with multiple tones and different color variation ranges were prepared.

The above-mentioned examples are provided only for illustrating the present multilayer allochroic pigments having angle dependence of the interference colors and its production process, which is not used for restricting the scope of the present invention.

## Claims

1. A multilayer allochroic pigment having angle dependence of the interference colors **characterized in that** a synthetic flake of silicate is used as a substrate, and a metal oxide coating with refractive index of more than 1.8 and an oxide coating with refractive index of less than 1.8 are deposited alternately on a surface of the synthetic flake of silicate, the number of the coating is at least three, said oxide coating with refractive index of less than 1.8 always lies between two metal oxide coatings with refractive index of more than 1.8, and said synthetic flake of silicate is a synthetic flake of sodium calcium silicate having a thickness of 0.1-10 µm and a particle diameter of 5-1500 µm.

2. The pigment according to claim 1, **characterized in that** said synthetic flake of silicate is a synthetic flake of sodium calcium silicate having a thickness of 1-5 µm and a particle diameter of 30-150 µm.

3. The pigment according to claims 1 or 2, **characterized in that** said metal oxide coating with refractive index of more than 1.8 has a coating ratio of 1-50%.

4. The pigment according to claims 1 or 2, **characterized in that** said oxide coating with refractive index of less than 1.8 has a coating ratio of 5-80%.

5. The pigment according to claim 3, **characterized in that** said metal oxide coating with refractive index of more than 1.8 has a coating ratio of 3-30%.

6. The pigment according to claim 4, **characterized in that** said oxide coating with refractive index of less than 1.8 has a coating ratio of 10-60%.

7. The pigment according to claims 1 or 2, **characterized in that** said metal oxide with refractive index of more than 1.8 is TiO₂, SnO₂, Fe₂O₃, Fe₃O₄, CoO, CO₂O₃, ZrO₂, Cr₂O₃ or a mixture or complex thereof.

8. The pigment according to claims 1 or 2, **characterized in that** said oxide with refractive index of less than 1.8 is SiO₂, Al₂O₃, Al(OH)₃, B₂O₃ or a mixture or complex thereof.

9. A method for producing the pigment according to claim 1, comprising the following steps:
step (1), in which a synthetic flake of silicate having a thickness of 0.1-10 µm and a particle diameter of 5-1500 µm is added into a certain amount of deionized water and stirred to form a suspension liquid with solid content of 1-20%; this suspension liquid is heated to 60-90°C and adjusted to pH 2-9; and then a solution of a soluble inorganic metal salt is added to reach a coating ratio of metal oxide coating of 1-50%, while the pH value thereof is kept constant; after finishing the addition of the solution, the mixture is stirred at a constant temperature for 10-30 minutes;
step (2), in which the suspension liquid obtained in step (1) is adjusted to pH 6-14, then a solution of a soluble inorganic salt is added to reach a coating ratio of oxide coating of 5-80%, while the pH value of the suspension liquid is kept constant; after finishing the addition of the solution, the mixture is stirred at a constant temperature for 10-30 minutes;
step (3), in which the suspension liquid obtained in step (2) is adjusted to pH 2-9, and then a solution of a soluble inorganic metal salt is added to reach a coating ratio of metal oxide coating of 1-50%, while the pH value thereof is kept constant, after finishing the addition of the solution, the mixture is stirred at a constant temperature for 10-30 minutes;
step (4), in which the suspension liquid obtained in step (3) is filtered, washed with deionized water, dried, calcined, and sieved;
wherein the metal oxide as a hydrolysate of said soluble inorganic metal salt has a refractive index of more than 1.8, and the oxide as a hydrolysate of said soluble inorganic salt has a refractive index of less than 1.8.

10. The method according to claim 9, **characterized in that** said synthetic flake of silicate is a synthetic flake of sodium calcium silicate having a thickness of 1-5 µm and particle diameter of 30-150 µm.

11. The method according to claim 9 or 10, **characterized in that** the above-mentioned steps (1), (2), and (3) can be repeated alternately.

12. The method according to claim 9 or 10, **characterized in that** said soluble inorganic metal salt is selected from a group consisting of TiCl₄, TiOCl₂, SnCl₄, Such, FeCl₃, FeCl₂, CoCl₂, ZrOCl₂ or CrCl₃.

13. The method according to claim 9 or 10, **characterized in that** said soluble inorganic salt is selected from a group consisting of water glass, silicate, AlCl₃, NaAlO₂ or borax.

14. The method according to claim 9 or 10, **characterized in that** the drying temperature in step (4) is 100-150°C, and the calcining temperature is 250-1000°C.

## Patentansprüche

1. Mehrschichtiges allochroisches Pigment mit einer Winkelabhängigkeit der Interferenzfarben, **dadurch gekennzeichnet, dass** eine synthetische Silikatschuppe als Substrat verwendet ist und eine Metalloxidbeschichtung mit einem Brechungsindex von mehr als 1,8 und eine Oxidbeschichtung mit einem Brechungsindex von weniger als 1,8 alternierend auf eine Oberfläche der synthetischen Silikatschuppe abgelagert sind, dass die Anzahl der Beschichtungen mindestens drei beträgt, dass die Oxidbeschichtung mit dem Brechungsindex kleiner als 1,8 zwischen zwei Metalloxidbeschichtungen mit dem Brechungsindex von mehr als 1,8 angeordnet ist und dass die synthetische Silikatschuppe eine synthetische Schuppe aus Natriumkalziumsilikat mit einer Dicke von 0,1 bis 10 µm und einem Teilchendurchmesser von 5 bis 1500 µm ist.

2. Pigment nach Anspruch 1, **dadurch gekennzeichnet, dass** die synthetische Silikatschuppe eine synthetische Schuppe aus Natriumkalziumsilikat mit einer Dicke von 1 bis 5 µm und einem Teilchendurchmesser von 30 bis 150 µm ist.

3. Pigment nach Anspruch 1 oder 2, **dadurch gekennzeichnet, dass** die Metalloxidbeschichtung mit dem Brechungsindex von mehr als 1,8 ein Beschichtungsverhältnis von 1 bis 50 % aufweist.

4. Pigment nach Anspruch 1 oder 2, **dadurch gekennzeichnet, dass** die Oxidschicht mit dem Brechungsindex von weniger als 1,8 ein Beschichtungsverhältnis von 5 bis 80 % aufweist.

5. Pigment nach Anspruch 3, **dadurch gekennzeichnet, dass** die Metalloxidbeschichtung mit dem Brechungsindex von mehr als 1,8 ein Beschichtungsverhältnis von 3 bis 30 % aufweist.

6. Pigment nach Anspruch 4, **dadurch gekennzeichnet, dass** die Oxidbeschichtung mit dem Brechungsindex von mehr als 1,8 ein Beschichtungsverhältnis von 10 bis 60 % aufweist.

7. Pigment nach Anspruch 1 oder 2, **dadurch gekennzeichnet, dass** das Metalloxid mit dem Brechungsindex von mehr als 1,8 TiO₂, SnO₂, Fe₂O₃, Fe₃O₄, CoO, CO₂O₃, ZrO₂, Cr₂O₃ oder eine Mischung oder ein Komplex davon ist.

8. Pigment nach Anspruch 1 oder 2, **dadurch gekennzeichnet, dass** das Oxid mit dem Brechungsindex von weniger als 1,8 SiO₂, Al₂O₃, Al(OH)₃, B₂O₃ oder eine Mischung oder ein Komplex davon ist.

9. Verfahren zum Herstellen des Pigments nach Anspruch 1 mit den folgenden Schritten:
Schritt (1), in dem eine synthetische Silikatschuppe mit einer Dicke von 0,1 bis 10 µm und einem Teilchendurchmesser von 5 bis 1500 µm in einer bestimmten Menge entionisiertem Wasser zugesetzt und gerührt wird, um eine flüssige Suspension mit einem Feststoffanteil von 1 bis 20 % herzustellen; in dem diese Suspension auf 60 bis 90°C erwärmt und auf pH 2 bis 9 eingestellt wird und in dem dann eine Lösung von einem löslichen anorganischen Metallsalz zugesetzt wird, um ein Beschichtungsverhältnis von Metalloxidbeschichtung von 1 bis 50 % einzustellen, während der pH-Wert davon konstant gehalten wird; wobei nach Beendigen der Zugabe der Lösung die Mischung für 10 bis 30 Minuten bei einer konstanten Temperatur gerührt wird;
Schritt (2), in dem die in Schritt (1) erhaltene lösliche Suspension auf pH 6 bis 14 eingestellt wird, in dem dann eine Lösung eines löslichen anorganischen Salz zugegeben wird, um ein Beschichtungsverhältnis von Oxidbeschichtung von 5 bis 80 % zu erreichen, während der pH-Wert der flüssigen Suspension konstant gehalten wird; wobei nach dem Beendigen der Zugabe der Lösung die Mischung für 10 bis 30 Minuten bei einer konstanten Temperatur gerührt wird;
Schritt (3), in dem die flüssige Suspension, die in Schritt (2) erhalten wird, auf pH 2 bis 9 eingestellt wird und in dem dann eine Lösung eines löslichen anorganischen Metallsalzes zugegeben wird, um ein Beschichtungsverhältnis von Metalloxidbeschichtung von 1 bis 50 % zu erreichen, während der pH-Wert derselben konstant gehalten wird, in dem nach dem Beendigen der Zugabe der Lösung die Mischung für 10 bis 30 Minuten bei einer konstanten Temperatur gerührt wird;
Schritt (4) in dem die flüssige Suspension, die in Schritt (3) erhalten wird, gefiltert, mit entionisiertem Wasser gewaschen, getrocknet, kalziniert und gesiebt wird;
wobei das Metalloxid als Hydrolysat des löslichen anorganischen Metallsalzes ein Brechungsindex von mehr als 1,8 aufweist und das Oxid als Hydrolysat des löslichen anorganischen Salzes einen Brechungsindex von weniger als 1,8 aufweist.

10. Verfahren nach Anspruch 9, **dadurch gekennzeichnet, dass** die synthetische Silikatschuppe eine synthetische Schuppe aus Natriumkalziumsilikat mit einer Dicke von 1 bis 5 µm und einem Teilchendurchmesser von 30 bis 150 µm ist.

11. Verfahren nach Anspruch 9 oder 10, **dadurch gekennzeichnet, dass** die oben erwähnten Schritte (1), (2) und (3) alternierend wiederholt werden können.

12. Verfahren nach Anspruch 9 oder 10, **dadurch gekennzeichnet, dass** das lösliche anorganische Metallsalz aus der Gruppe ausgewählt ist, die aus TiCl₄, TiOCl₂, SnCl₄, SnCl₂, FeCl₃, FeCl₂, COCl₂, ZrOCl₂ oder CrCl₃ besteht.

13. Verfahren nach Anspruch 9 oder 10, **dadurch gekennzeichnet, dass** das lösliche anorganische Salz aus einer Gruppe ausgewählt ist, die aus Wasserglas, Silikat, AlCl₃, NaAlO₂ oder Borax besteht.

14. Verfahren nach Anspruch 9 oder 10, **dadurch gekennzeichnet, dass** die Trocknungstemperatur in Schritt (4) 100 bis 150°C und die Kalzinierungstemperatur 250 bis 1000°C beträgt.

## Revendications

1. Pigment allochroïque multicouche ayant une dépendance angulaire des couleurs d'interférence, **caractérisé en ce qu'**un flocon de synthèse de silicate est utilisé comme substrat, et un revêtement en oxyde de métal ayant un indice de réfraction supérieur à 1,8 et un revêtement en oxyde ayant un indice de réfraction inférieur à 1,8 sont déposés de façon alternée sur une surface du flocon de synthèse de silicate, le nombre de revêtement est d'au moins trois, ledit revêtement en oxyde ayant un indice de réfraction inférieur à 1,8 se trouve toujours entre deux revêtements en oxyde de métal ayant un indice de réfraction supérieur à 1,8, et ledit flocon de synthèse de silicate est un flocon de synthèse de silicate calcosodique ayant une épaisseur de 0,1 à 10 µm et un diamètre de particules de 5 à 1 500 µm.

2. Pigment selon la revendication 1, **caractérisé en ce que** ledit flocon de synthèse de silicate est un flocon de synthèse de silicate calcosodique ayant une épaisseur de 1 à 5 µm et un diamètre de particules de 30 à 150 µm.

3. Pigment selon la revendication 1 ou 2, **caractérisé en ce que** le revêtement en oxyde de métal ayant un indice de réfraction supérieur à 1,8 a un rapport de revêtement de 1 à 50 %.

4. Pigment selon la revendication 1 ou 2, **caractérisé en ce que** ledit revêtement en oxyde ayant un indice de réfraction inférieur à 1,8 a un rapport de revêtement de 5 à 80 %.

5. Pigment selon la revendication 3, **caractérisé en ce que** ledit revêtement en oxyde de métal ayant un indice de réfraction supérieur à 1,8 a un rapport de revêtement de 3 à 30 %.

6. Pigment selon la revendication 4, **caractérisé en ce que** ledit revêtement en oxyde ayant un indice de réfraction inférieur à 1,8 a un rapport de revêtement de 10 à 60 %.

7. Pigment selon la revendication 1 ou 2, **caractérisé en ce que** ledit oxyde de métal ayant un indice de réfraction supérieur à 1,8 est TiO₂, SnO₂, Fe₂O₃, Fe₃O₄, CoO, Co₂O₃, ZrO₂, Cr₂O₃ ou un mélange ou complexe de ceux-ci.

8. Pigment selon la revendication 1 ou 2, **caractérisé en ce que** ledit oxyde ayant un indice de réfraction inférieur à 1,8 est SiO₂, Al₂O₃, Al(OH)₃, B₂O₃ ou un mélange ou complexe de ceux-ci.

9. Procédé de production du pigment selon la revendication 1, comprenant les étapes suivantes :
étape (1), dans laquelle un flocon de synthèse de silicate ayant une épaisseur de 0,1 à 10 µm et un diamètre de particules de 5 à 1 500 µm est ajouté dans une certaine quantité d'eau désionisée et agité pour former un liquide de suspension ayant une teneur en matière sèche de 1 à 20 % ; ce liquide de suspension est chauffé à 60-90 °C et ajusté à un pH 2-9 ; puis une solution d'un sel de métal inorganique soluble est ajoutée pour atteindre un rapport de revêtement du revêtement en oxyde de métal de 1 à 50 %, tandis que sa valeur de pH est maintenue constante ; après avoir terminé l'addition de la solution, le mélange est agité à une température constante pendant 10 à 30 minutes ;
étape (2), dans laquelle le liquide de suspension obtenu à l'étape (1) est ajusté à un pH 6-14, puis une solution d'un sel inorganique soluble est ajoutée pour atteindre un rapport de revêtement du revêtement d'oxyde de 5 à 80 %, alors que la valeur de pH du liquide de suspension est maintenue constante ; après avoir terminé l'addition de la solution, le mélange est agité à une température constante pendant 10 à 30 minutes ;
étape (3), dans laquelle le liquide de suspension obtenu à l'étape (2) est ajusté à un pH 2-9, puis une solution d'un sel de métal inorganique soluble est ajoutée pour atteindre un rapport de revêtement du revêtement d'oxyde de métal de 1 à 50 %, tandis que sa valeur de pH est maintenue constante ; après avoir terminé l'addition de la solution, le mélange est agité à une température constante pendant 10 à 30 minutes ;
étape (4), dans laquelle le liquide de suspension obtenu à l'étape (3) est filtré, lavé avec de l'eau désionisée, séché, calciné et tamisé ;
dans lequel l'oxyde de métal en tant qu'hydrolysat dudit sel de métal inorganique soluble a un indice de réfraction supérieur à 1,8, et l'oxyde en tant qu'hydrolysat dudit sel inorganique soluble a un indice de réfraction inférieur à 1,8.

10. Procédé selon la revendication 9, **caractérisé en ce que** ledit flocon de synthèse de silicate est un flocon de synthèse de silicate calcosodique ayant une épaisseur de 1 à 5 µm et un diamètre de particules de 30 à 150 µM.

11. Procédé selon la revendication 9 ou 10, **caractérisé en ce que** les étapes (1), (2) et (3) susmentionnées peuvent être répétées de façon alternée.

12. Procédé selon la revendication 9 ou 10, **caractérisé en ce que** ledit sel de métal inorganique soluble est choisi dans le groupe constitué par TiCl₄, TiOCl₂, SnCl₄, SnCl₂, FeCl₃, FeCl₂, CoCl₂, ZrOCl₂ ou CrCl₃.

13. Procédé selon la revendication 9 ou 10, **caractérisé en ce que** ledit sel de métal inorganique soluble est choisi dans le groupe constitué par le verre soluble, le silicate, AlCl₃, NaAlO₂ ou le borax.

14. Procédé selon la revendication 9 ou 10, **caractérisé en ce que** la température de séchage à l'étape (4) est de 100 à 150 °C, et la température de calcination est de 250 à 1 000 °C.
